# EUROPÄISCHE PATENTSCHRIFT

(11) **EP 1 053 269 B1**
(45) Veröffentlichungstag und Bekanntmachung des Hinweises auf die Patenterteilung: **02.04.2003**
(21) Anmeldenummer: 99908822.2
(22) Anmeldetag: 26.01.1999
(51) Int. Cl.: C08G 18/08, C08G 18/16, C08J 9/34

(54) **VERFAHREN ZUR HERSTELLUNG VON FLUORCHLORKOHLENWASSERSTOFF-FREIEN WEICHELASTISCHEN, HALBHARTEN ODER HARTEN POLYURETHANFORMKÖRPERN MIT EINEM ZELLIGEN KERN UND EINER VERDICHTETEN RANDZONE**
METHOD FOR PRODUCING SOFT AND ELASTIC, SEMI-HARD OR HARD MOULDED BODIES OF POLYURETHANE FREE FROM FLUOROCHLOROHYDROCARBON AND HAVING A CELLULAR CORE AS WELL AS A COMPACTED SIDE AREA
PROCEDE DE PRODUCTION DE CORPS MOULES EN POLYURETHANE ELASTIQUES MOUS, MI-DURS OU DURS, EXEMPTS D'HYDROCARBURE FLUOROCHLORE, COMPORTANT UN NOYAU CELLULAIRE ET UNE ZONE MARGINALE COMPACTEE

(30) Priorität: 07.02.1998 DE 19804911
(43) Veröffentlichungstag der Anmeldung: 22.11.2000
(73) Patentinhaber: BASF AKTIENGESELLSCHAFT, 67056 Ludwigshafen (DE)
(72) Erfinder: HORN, Peter, D-69118 Heidelberg (DE); SCUPIN, Hansjoachim, D-67069 Ludwigshafen (DE); STADLER, Edmund, D-96142 Hollfeld (DE); TINTELNOT, Dieter, D-49356 Diepholz (DE); TREULING, Ulrich, D-64625 Bensheim (DE)
(86) Internationale Anmeldenummer: EP9900471
(87) Internationale Veröffentlichungsnummer: WO99040138

(56) Entgegenhaltungen:
- EP-A- 0 500 214
- EP-A- 0 656 382
- US-A- 5 426 124

## Beschreibung

Gegenstand der Erfindung ist ein Verfahren zur Herstellung von Fluorchlorkohlenwasserstoff-freien weichelastischen, halbharten oder harten Polyurethanformkörpern mit einem zelligen Kern und einer verdichteten Randzone durch Umsetzung von
a) Polyisocyanaten mit
b) mindestens einer Verbindung mit mindestens zwei reaktiven Wasserstoffatomen,
c) Treibmitteln,
d) Katalysatoren sowie gegebenenfalls
e) Hilfsmitteln und/oder Zusatzstoffen,
dadurch gekennzeichnet, daß die Treibmittel c)
c1) mindestens einen Carbodiimid bildenden Katalysator, insbesondere einen Phosphor enthaltenden Carbodiimid bildenden Katalysator,
c2) mindestens eine Carbonsäure und/oder deren Anhydrid enthalten.

Weichelastische, halbharte oder harte Polyurethanformkörper mit einem zelligen Kern und einer verdichteten Randzone, auch als Polyurethan-Integralschaumstoffe bezeichnet, sind seit langem bekannt und vielfach in der Literatur beschrieben.

Eine zusammenfassende Übersicht über derartige Verbindungen findet sich beispielsweise im Kunststoffhandbuch, Band 7, Polyurethane, herausgegeben von Dr. Günter Oertel, Carl-Hanser-Verlag München Wien,3. Auflage, 1993, auf den Seiten 355 bis 415.

Bei der Herstellung der Polyurethan-Integralschaumstoffe wurden als Treibmittel in der Vergangenheit Fluorchloralkane, wie Trichlorfluormethan, eingesetzt, die unter dem Einfluß der exothermen Polyadditionsreaktion zunächst verdampfen, danach bei erhöhtem Druck an der kühleren Innenwand des Formwerkzeugs partiell kondensiert und in den Formkörper eingelagert werden.. Diese Treibmittel führten zu Polyurethan-Integral-schaumstoffen mit ausgezeichneten Eigenschaften. Auf Grund ihres hohen Ozon-Abbaupotentials dürfen derartige Treibmittel jedoch nicht mehr eingesetzt werden. Zur Reduzierung der Fluorchloralkane wurde als Treibmittel überwiegend Wasser eingesetzt, das mit den Isocyanatgruppen unter Bildung von Kohlendioxid reagiert, das als eigentliches Treibmittel wirkt. Nachteilig an diesem Verfahren ist jedoch, daß das Kohlendioxid unter den im Formwerkzeug herrschenden Reaktionsbedingungen nicht an der Werkzeuginnenfläche kondensiert und es so zur Bildung von Polyurethan-Integralschaumstoffen mit einer porenhaltigen Oberfläche kommen kann.

Zur Behebung dieser Nachteile wurde der Einsatz von porösen Stoffen bei der Herstellung von Polyurethan-Integralschaumstoffen So wird in DE-A-1 804 362 Polyurethan-Integralschaumstoffe die Herstellung von Polyurethan-Integralschaumstoffe unter Mitverwendung von Alkali-Aluminium-Silikaten oder organischen, Hydratwasser enthaltenden Verbindungen beschrieben. Dadurch sollen schrumpffreie Formkörper mit Gesamtdichten von 120 g/l hergestellt werden.

Die Herstellung von Polyurethan-Integralschaumstoffen unter Mitverwendung von zeolithischen Verbindungen wird in EP-A-319 866, oder DE-A-40 34 082, die Mitverwendung von Kieselgel in US-A-4,518,718 und die Mitverwendung von Aktivkohle in EP-A-545 175 beschrieben.

In EP-A-364 854 wird ein Verfahren zur Herstellung von Polyurethan-Integralschaumstoffen beschrieben, bei dem als Treibmittel Kohlenwasserstoffe, insbesondere n-Pentan, eingesetzt werden. Wegen des niedrigen Flammpunktes der dort beschriebenen Treibmittel ist deren Einsatz jedoch mit Sicherheitsrisiken verbunden. Das gleiche gilt auch für den Einsatz von tertiären Alkoholen als Treibmittel, wie er beispielsweise in DE-A-40 20 079 beschrieben ist.

In EP-A-121 850 wird ein Verfahren zur Herstellung von zellhaltigen Polyurethanen beschrieben, bei dem als Treibmittel bei 20°C flüssige Amin-Kohlendioxid-Addukte verwendet werden. Nachteilig hierbei ist insbesondere die zu kurze Startzeit dieser Systeme.

Weiterhin ist die Verwendung von Carbonsäuren als Treibmittel für Polyurethanschäume bekannt. So wird in EP-A-476 337 eine Kombination von Wasser und Carbonsäuren und in EP-A-409 199 Mischungen aus halogenhaltigen Kohlenwasserstoffen, Wasser und Carbonsäuren als Treibmittel für Hartschäume beschrieben. In EP-A-372 292 werden wäßrige Carbonsäuren, insbesondere Milchsäure als Treibmittel für Hartintegralschäume vorgeschlagen. In EP-A-614 931 werden als Treibmittel zur Herstellung von Polyurethanschaum-Form-körpern mit kompakter Oberfläche ebenfalls Carbonsäuren, beispielsweise Malonsäure, Maleinsäure, Fumarsäure oder Citronensäure, und deren Ester und Salze, insbesondere Ammoniumsalze, vorgeschlagen,. Der Einsatz dieser Carbonsäuren hat jedoch auch Nachteile, so entsteht bei der Verwendung von Oxalsäure giftiges Kohlenmonoxid, bei der Verwendung von Milchsäure können nur Schäume mit hoher Dichte hergestellt werden, Malonsäure wirkt als Atemgift und muß dementsprechend vorsichtig gehandhabt werden. Außerdem führt der in EP-A-614 931 beschriebene Einsatz von Carbonsäuren zu einer unzureichenden Treibwirkung.

EP-A-403 066 beschreibt ein Verfahren zur Herstellung von Polyurethan-Integralschaum in Gegenwart von Carbodiimid-Katalysatoren, insbesondere Oxophospholenen. Durch die Carbodiimid-Bildung kann die Menge an Fluorchlorkohlenwasserstoffen reduziert werden, der Einsatz von Fluorchlorkohlenwasserstoffen ist jedoch immer noch notwendig.

In EP-A-500 214 wird ein Verfahren zur Herstellung von Polyurethan-Integralschaum beschrieben, bei dem als Katalysatoren Phospholenoxide eingesetzt werden und Wasser sowie Fluorchlorkohlenwasserstoffe als Treibmittel möglichst vermieden werden. Die Polyolkomponente enthält zu mindestens 25 % isocyanatreaktive Verbindungen, die Imino- oder Enaminogruppen enthalten. Als Katalysatoren für die Reaktion von Aminogruppen und Isocyanatgruppen können auch langkettige Carbonsäuren und deren Anhydride eingesetzt werden. Die Mitverwendung von Verbindungen mit Imino - oder Enaminogruppen hat jedoch Nachteile. Derartige Verbindungen sind sehr aufwendig herzustellen und sind sehr hydrolyseempfindlich, insbesondere in den gemäß EP-A-500 214 eingesetzten hohen Mengen.

EP-A-590 638 beschreibt die Herstellung von Polyurethan-Polycarbodiimid-Hartschäumen, die durch Versprühen aufgebracht werden. Als Polyolkomponente werden Phenol-Formaldehyd-Harze eingesetzt. Treibmittel ist Kohlendioxid, welches durch die Reaktion der Isocyanate mit den Phenol-Formaldehyd-Harzen, durch die Carbodiimid-Reaktion und gegebenenfalls durch Mitverwendung von Wasser entsteht. Als Carbodiimid-Katalysatoren, die neben Isocyanurat- und Urethan-Katalysatoren eingesetzt werden, werden, neben anderen, organische Phosphorverbindungen, wie Phosphorenoxide vorgeschlagen. Die beschriebenen kurzkettigen Phenol-Formaldehyd-Harze spalten jedoch bei den Reaktionsbedingungen der Polyurethanbildung Phenol ab, was gesundheitlich bedenklich ist.

In EP-A-381 324 wird ein Katalysatorsystem aus einem Carbodiimid-Katalysator und einem Trimerisierungskatalysator beschrieben. Als Carbodiimid-Katalysatoren werden Phospholenoxide eingesetzt. Als Treibmittel werden das bei der Carbodiimid-Reaktion freiwerdende Kohlendioxid sowie gegebenenfalls Wasser und halogenierte Kohlenwasserstoffe.

DE-A-28 01 701 beschreibt ein Verfahren zur Herstellung von Polyamiden und Polyamid-Imiden aus Isocyanaten und Carbonsäuren und/oder Carbonsäureanhydriden, bei dem als Katalysatoren cyclische Phosphorverbindungen eingesetzt werden.

Bei der Herstellung von Polyurethan-Integralschaumstoffen kommt es jedoch bei der alleinigen Verwendung von Carbodiimid-Katalysatoren als Treibmittel zur Ausbildung einer porigen Haut, was als Qualitätsmangel betrachtet wird.

In US-A-5,214,076 wird ein offenzelliger Polycarbodiimid-Polyisocyanurat-Schaum beschrieben, bei dem als Polyolkomponente aromatische Polyesteralkohole und als alleiniges Treibmittel Wasser verwendet wird. Als Oligomerisierungskatalysatoren werden cyclische Phospholenoxide, oder Kaliumcarboxylate vorgeschlagen. Bei der Verwendung von Kaliumcarboxylaten wird die Mitverwendung von Carbonsäuren empfohlen, da es ansonsten auf Grund der hohen Schäumungsgeschwindigkeit zu Rissen im Schaum kommen kann.

Die Aufgabe der vorliegenden Erfindung lag darin, ein Verfahren zur Herstellung von Polyurethan-Integral-schaumstoffen zu entwikkeln, das ohne Verwendung von Fluorchlorkohlenwasserstoffen und möglichst ohne die Verwendung von Wasser und brennbaren Kohlenwasserstoffen als Treibmittel auskommt, zu Formkörpern mit einer integralen Dichteverteilung und einer porenfreien Oberfläche führt.

Die Aufgabe konnte überraschenderweise dadurch gelöst werden, daß die Treibmittel mindestens einen Carbodiimid bildenden Katalysator und mindestens eine Carbonsäure und/oder deren Anhydrid, Amid oder Imid enthalten.

Gegenstand der Erfindung ist demnach ein Verfahren zur Herstellung von Fluorchlorkohlenwasserstoff-freien weichelastischen. halbharten oder harten Polyurethanformkörpern mit einem zelligen Kern und einer verdichteten Randzone durch Umsetzung von
a) Polyisocyanaten
b) Polyester-polyolen und/oder Polyether-polyolen und gegebenenfalls Kettenverlängerungs-und Vernetzungsmitteln,
c) Treibmitteln
d) Katalysatoren sowie gegebenenfalls
e) Hilfsmitteln und/oder Zusatzstoffen,
dadurch gekennzeichnet, daß die Treibmittel c)
c1) mindestens einen Carbodiimid bildenden Katälysator, insbesondere einen Phosphor enthaltenden Carbodiimid bildenden Katalysator,
c2) mindestens eine Carbonsäure und/oder deren Anhydrid, Amid oder Imid enthalten, mit der Maßgabe, daß die mit Isocyanat reaktiven Gruppen der Verbindung b) zu weniger als 25 % Imin - oder Eanamingruppen enthalten.

Gegebenenfalls kann auch Wasser in geringen Mengen als Treibmittel zugesetzt werden, im allgemeinen in einer Menge von maximal 0,3 Gew.-%. bezogen auf die Summe der Komponenten b) bis e). Diese Menge wird im Normalfall durch den technologisch bedingten Wassergehalt der Polyole in das Reaktionsgemisch eingetragen.
Für bestimmte Einsatzgebiete können auch zusätzlich physikalische Treibmittel eingesetzt werden, wobei der Einsatz von Fluorchlorkohlenwasserstoffen (FCKW) ausgeschlossen ist.

Als Phosphor enthaltende, Carbodiimid bildende Katalysator werden vorzugsweise solche Verbindungen eingesetzt, wie sie in der Polyurethan-Chemie für diesen Zweck üblich und gebräuchlich sind. Sie werden erfindungsgemäß vorzugsweise in einer Menge von 0,1 bis 4,0 Gew.-%, bezogen auf die Summe der Komponenten b) bis e), eingesetzt.

Insbesondere handelt es sich dabei um Phosphor enthaltende fünfgliedrige hetrocyclische Verbindungen der allgemeinen Formeln I und II, wobei 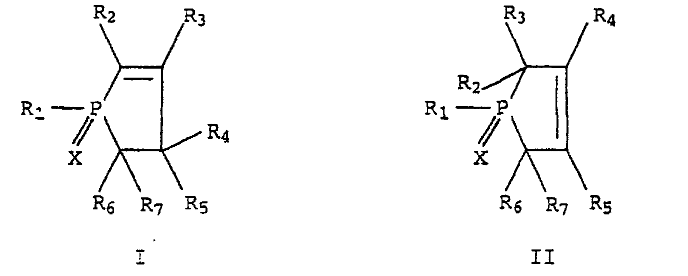
- X: Schwefel oder insbesondere Sauerstoff
- R₁: eine substituierte oder unsubstituierte Alkyl-, Phenyl-, Naphtyl- oder Benzylgruppe bedeuten, insbesondere Phenyl - oder Methyl-,
- R₂, R₃, R₄, R₅, R₆ und R₇: unabhängig voneinander Wasserstoff, Halogen oder eine C₁- bis C₄-Alkylgruppe bedeuten. Derartige Verbindungen sind beispielsweise beschrieben in US-A-3,657,161, Spalte 4, Zeile 41, bis Spalte 5, Zeile 3.

Derartige Verbindungen sind bekannt und werden, beispielsweise in G. M. Kosolapoff, L. Maier, Organic Phosphorous Compounds, Wiley-Interscience, New York, 1972, Vol. 3, Seiten 370-371, 458 bis 463 und Vol. 4, Seiten 9, 10 und 48, sowie in US-A-2,663,737, 2,663,738, 2,663,739, 2,941,966 und 2,853,473 beschrieben. Beispiele hierfür sind 1-Methyl-loxophospholin, 1-Ethyl-loxophospholin, 1-Bucyl-loxophospholin, 1-(2Ethylhexyl)-1-oxophospholin, 1-Methyl-1-thiophospholin, 1-(2-Chloroethyl-1-oxophospholin, 1-Phenyl-1-oxophospholin, 1-p-Tolyl-1-oxophospholin, 1-1-Chloromethyl-1-oxophospholin, 1,3-Dimethyl-1-oxophospholin, 1,2-Dimethyl-1-oxophospholin, 1-Methyl-3-Chloro-1-oxophospholin, 1-Methyl-3-Bromo-1-oxophospholin, 1-Chlorophenyl-1-oxophospholin, 1,3,4-Trimethyl-1-oxophospholin, 1,2,4-Trimethyl-1-oxophospholin, 1,2,2-Trimethyl-1-oxo-phospholin, 1-Phenyl-1-thiophospholin, 1-Phenyl-3-Methyl-1-oxophospholin, 1-Phenyl-2,3-Dimethyl-1-oxophospholin.

Bevorzugt sind Verbindungen mit einer Doppelbindung in der 2,3 - oder 3,4-Stellung. Zumeist erfolgt ihr Einsatz in Form technischer Gemische der Verbindungen I bis II.

Insbesondere ist der Phosphor enthaltende Carbodiimidkatralysator ausgewählt aus der Gruppe, enthaltend 1-Methyl-3-phospholen-1-oxid, 3-Methyl-3-phenylphospholenoxid, 3-Methyl-1-benzylphospholenoxid, 3-Methyl-1-ethyl-phospholenoxid, 1-Methyl-3-phospholen-1-oxid und 1-Methyl-2- phospholen-1-oxid sowie Gemische der genannten Verbindungen untereinander.

An Stelle oder insbesondere gemeinsam mit den cyclischen, Phosphor enthaltenden Carbodiimidkatalysatoren der allgemeinen Formeln I bis II können auch andere Carbodiimidkatalysatoren eingesetzt werden, beispielsweise Diphenylphosphinsäuren und ihre Salze, Bis-(2,4,4,,-trimethylpentyl)-phosphinsäure, Tributylphosphin, Triisobutylphosphinsulfid, Trialkylphosphinoxide, wie Trioctylphosphinoxid oder Trihexylphosphinoxid, Triphenylphosphin, Tetraphenylphosphinbromid, Tetrabutylphosphinchlorid, Tetrabutylphosphinbromid, Bis-(2,4,4-trimethylpentyl)-dithiophosphonsäure, Bis-(2,4,4-trimethylpentyl) -monothiophosphon-säure, sowie hoch sterisch gehinderte Phosphinoxide.

Derartige Phosohorsäureverbinduungen sind beispielsweise beschrieben in "Internationale Vereinigung für reine und angewandte Chemie, Kortüm, Vogel und Andrussow, London, Butterworths, 1961, Seiten 474 bis 492.

Als Treibmittelkomponente c2) werden Carbonsäuren, Polycarbonsäuren, und/oder deren intermolekularen und/oder intramolekularen Anhydride und/oder deren Amide oder Imide eingesetzt.

In einer bevorzugten Ausführungsform können als Carbonsäuren aliphatische Dicarbonsäuren eingesetzt werden.

In einer weiteren bevorzugten Ausführungsform können als Carbonsäuren aliphatische Monocarbonsäuren mit 2 bis 8 Kohlenstoffatomen eingesetzt werden.

Die Carbonsäuren können gesättigt oder ungesättigt und ein- oder mehrwertig sein. Es ist auch möglich, Gemische dieser Säuren einzusetzen.

Die Säuren werden vorzugsweise in einer Menge von 0,2 bis 10 Gew.-%, bezogen auf die Summe der Komponenten b) bis e) eingesetzt.

Es hat sich als vorteilhaft erwiesen, Carbonsäuren einzusetzen, die in α±, β- oder γ±Stellung zur Carboxylgruppe substituiert sind. Es können hierbei sowohl Substituenten mit einem negativen induktiven Effekt, wie Halogenatome, Nitrogruppen, Aminogruppen, Methoxygruppen, Ketogruppen, Phenylgruppen, Trifluormethylgruppen, Acetylgruppen, Benzoylgruppen, Phenacetylgruppen, Nitrilgruppen, Hydroxygruppen und Trialkylammoniumgruppen als auch solche mit einem positiven induktiven Effekt, insbesondere C₁- bis C₅-Alkylgruppen, wie Methylgruppen, Ethylgruppen, Isopropylgruppen, eingesetzt werden.

Besonders geeignet sind solche Carbonsäuren und Polyoxycarbonsäuren, die bei der Reaktion mit Isocyanatgruppen in Kohlendioxid, Wasser und gegebenenfalls Olefin zerfallen.

Beispiele für gesättigte Monocarbonsäuren sind Essigsäure, Propionsäure, 3-Hydroxypropionsäure, Buttersäure, n-Valeriansäure, Methyl-ethyl-essigsäure, Diethylessigsäure, Ethyl-dimethylessigsäure, Isopropyl-methylessig-säure, Isoamylessigsäure, α-Methylhexansäure, Butylethylessigsäure, α-Methyl- Buttersäure, β-Methyl-Buttersäure, Isobuttersäure, α,β-Dimethyl-Buttersäure, α,α-Dimethylacetylessigsäure, 2-Chlorpropionsäure, 3-Chlorpropionsäure, β-Phenyl-propionsäure, Benzoylessigsäure, Cyclopropancarbonsäure, α-Aminoessig-säure, α-Aminoiso-capronsäure, α-Amino-β-methyl-n-valeriansäure, Monochloressigsäure, Dichloressigsäure Imino-diessigsäure, Diphenylessigsäure, Triphenylessigsäure, Nitrilotriessigsäure, Äthylendiamin-tetraessigsäure, Phenylessigsäure, α-Phenyl-α-Hydroxypropionsäure, 3-Hydroxypropionsäure, β-Aminopropionsäure, α-Chlorbuttersäure, β-Chlorbuttersäure γ-Chlor-buttersäure, β-Oxy-buttersäure, β-Brom-propionsäure, γ-Brom-buttersäure, Glykolsäure, γ-Oxy-buttersäure, Milchsäure, Glycerinsäure, γ-Chlor-valeriansäure, γ-Hydroxy-valeriansäure, β-Hydroxy-propionsäure, γ- Hydroxy-buttersäure, δ-Hydroxy- valeriansäure, Trimethylglycin, β-Amino-propionsäure, γ- Amino-buttersäure, δ-Amino-valeriansäure, Furilsäure, Hippursäure, Pantothensäure, α-Keto-propionsäure, α- Amino-Äthylglykolsäure, β-Oxy-isobuttersäure, Acetessigsäure, Trimethylessigsäure, Acetylbrenztraubensäure, Isopropylessigsäure, Stearyldiketen, ε-Ketosäuren, γ- und δ-Ketosäuren, Monojodessigsäure.

Die genannten Säuren sind zumeist bei Raumtemperatur flüssig und können in dieser Form der Polyol- und/oder Isocyanatkomponente zugesetzt werden. Bei Raumtemperatur feste Säuren können in Polyolen, insbesondere den niederviskosen Kettenverlängerern und oder Vernetzern oder, sofern derartige Stoffe bei der Herstellung der Polyurethane eingesetzt werden, inerten Weichmachern, gelöst und diese Lösung mindestens einer der Reaktionskomponenten, insbesondere der A-Komponente, zugesetzt werden.

An Stelle oder im Gemisch mit den genannten Säuren können auch deren intermolekularen Anhydride eingesetzt werden.

Als geeignete Lösungsmittel für die genannten Säuren und deren intermolekularen Anhydride haben sich bei Raumtemperatur flüssige Assoziate von ε-Caprolactam und Diolen und/oder Polyolen erwiesen.

Die Säuren können auch in Form ihrer Salze eingesetzt werden. Geeignet sind insbesondere Ammoniumsalze, Betaine sowie die Alkali- und Erdalkalisalze der Carbonsäuren. Die Ammoniumsalze der Carbonsäuren werden bekanntermaßen durch Umsetzung der Carbonsäuren mit Ammoniak hergestellt. Bei Verwendung eines stöchiometrischen Säureüberschusses entstehende Gemische aus Ammoniumsalzen und freien Säuren können erfindungsgemäß ebenfalls eingesetzt werden. Der Vorteil derartiger Gemische liegt in einer Unterdrückung der Dissoziation der Salze. Der bei der Schäumreaktion entstehende Ammoniak wirkt als zusätzliches Treibmittel. An Stelle von Ammoniumsalzen können auch die Salze von tertiären Aminen eingesetzt werden. Unter den Bedingungen der Verschäumung bildet sich daraus das tertiäre Amin zurück, das als Katalysator für die Polyurethanreaktion wirkt.

Auch bei der Verwendung von Alkali- und Erdalkalisalzen der erfindungsgemäßen Carbonsäuren ist es vorteilhaft, einen Überschuß an freier Säure einzustellen. Das Molverhältnis von Salz zu freier Säure beträgt vorzugsweise etwa 1:1,2 bis 1:1,8. Die Freisetzung der Säuren aus den genannten Salzen erfolgt durch Zusatz einer Säure mit einem geringeren pKs-Wert.

Zu den erfindungsgemäßen gesättigten Monocarbonsäuren gehören auch Homopolymere, Copolymere und Pfropfpolymere mit olefinisch ungesättigten Carbonsäuren. Derartige Verbindungen sind beispielsweise in EP-A-711 799 beschrieben. Bei den Homopolymeren handelt es sich um Polymere von olefinisch ungesättigten Carbonsäuren und/oder deren Anhydriden untereinander. Copolymere sind Polymere aus olefinisch ungesättigten Monocarbonsäuren mit carboxylgruppenfreien, olefinisch ungesättigten Monomeren. Als olefinisch ungesättigte Monocarbonsäuren werden hierbei vorzugsweise solche mit 3 bis 8 Kohlenstoffatomen, insbesondere Acrylsäure, Methacrylsäure, Dimethylacrylsäure, Ethylacrylsäure, Allylessigsäure und Vinylessigsäure. Bevorzugte Olefinisch ungesättigte Dicarbonsäuren sind Maleinsäure, und Fumarsäure. Bevorzugte carboxylgruppenfreie, olefinisch ungesättigte Monomere sind Vinylether.

Polymerisate aus ungesättigten Carbonsäuren werden bevorzugt der Isocyanatkomponente zugesetzt. Beispiele hierfür sind Polyacrylsäure und Polymethacrylsäure. Wegen des hohen Molekulargewichtes dieser Polymerisate ist ihr Gehalt an Carboxylgruppen gering.

Als Säurekomponente können auch ethylenisch ungesättigte Carbonsäuren und/oder deren inter- oder intramolekulare Anhydride eingesetzt werden. Geeignet sind monoethylenisch ungesättigte Monocarbonsäuren mit 3 bis 10 Kohlenstoffatomen. α,β-ungesättigte Monocarbonsäuren können leicht durch Abspaltung von Halogenwasserstoff aus β-Halogencarbonsäuren, durch Dehydratisierung von β-Hydroxysäuren oder durch Desaminierung von β-Aminosäuren hergestellt werden. Beispielhaft genannt seien Acrylsäure und Methacrylsäure, β,β-Dimethylacrylsäure, Glutaconsäure, Ethylacrylsäure, Allylessigsäure, Vinylessigsäure, n-Crotonsäure, Isocrotonsäure, Trimethylacrylsäure, Aconitsäure, Zimtsäure, Maleinsäure, Fumarsäure, Mesaconsäure, Methylenmalonsäure, Citraconsäure, Itaconsäure. Als Anhydride ethylenisch ungesättigter Carbonsäuren seien beispielhaft genannt Maleinsäureanhydrid, Benzoxazine, wie Isatosäureanhydrid. Bevorzugt verwendet werden Anhydride, welche aus Ethylbenzol und Maleinsäureanhydrid hergestellt werden. Die Zahl der Maleinsäureanhydrid-Einheiten beträgt vorzugsweise 3 bis 4. Ebenfalls geeignet sind basische oder saure Aminosäuren.

Geeignete aromatische Carbonsäuren sind beispielsweise Salicylsäure, 4-Amino-Salicylsäure, 3-Methoxy-2-Methylol-Benzoesäure, p-Aminobenzoesäure.

Geeignet sind weiterhin gesättigte Dicarbonsäuren, ihre Anhydride sowie mehrwertige Hydroxycarbonsäuren. Geeignet sind weiterhin intramolekularen Anhydride von aliphatischen und/oder aromatischen Carbonsäuren, die gegebenenfalls noch eine freie Carboxylgruppe enthalten.

Als Dicarbonsäuren und deren Verbindungen seien beispielhaft genannt Bernsteinsäure, Glutarsäure, Adipinsäure sowie deren intramolekulare Anhydride, Ethylenoxalat, Mono- bzw. Dialkylmalonsäureester, Acetylendicarbonsäure, Methylmalonsäure, Diglykolsäure, Dimethylmalonsäure, Ethylmalonsäure, Methylbernsteinsäure, Phtalsäure, Phtalsäureanhydrid, Dihydroxyessigsäure, Isophtalsäure, Brenztraubensäure, Tartronsäure, p-tert.-Butylbenzoesäure, Hydroxymalonsäure, 2,3-Dihydroxybernsteinsäure, Äpfelsäure, Traubensäure, Dihydroxyfumarsäure, Dihydroxymaleinsäure, Mesoweinsäure, Acetondicarbonsäure, Mesoxalsäure, Mesoxalsäurehydrat, Thioäpfelsäure, Tricarballylsäure, Citronensäure(hydrat), Hydroxyfumarsäure, Hydroxymaleinsäure, Oxalessigsäure, Chinasäure, Shikimisäure, D-Zuckersäure, D-Mannozuckersäure, Schleimsäure, D-Gluconsäure, D-Mannonsäure, Asparaginsäure, Glutaminsäure, Tetrahydrophtalsäure, Ascorbinsäure, α-D-Galacturonsäure, Diethylmalonsäure, Mandelsäure, Phenylmalonsäure, Trimesinsäure, Trimellithsäure, Pyromellithsäure, Gallussäure, Mallophansäure, Mellithsäure, Anthranilsäure, , Phenylmalonsäure, Phenylbernsteinsäure, Benzylbernsteinsäure, α,α-Dibenzyl-bernsteinsäure, Phenylalanin, Benzilsäure, Tyrosin, Dihydroascorbinsäure, Cyanursäure, trans-Cyclohexan-1,2-dicarbonsäure, cis- Cyclohexan-1,2-dicarbonsäure, trans-Cyclohexan-1,4-dicarbonsäure, cis-Cyclohexan-1,4-dicarbonsäure. Wie oben ausgeführt, können die Säuren auch in Form ihrer inter- und intramolekularen Anhydride eingesetzt werden. Die genannten Carbonsäuren sind im Landolt-Börnstein, 1960, Seiten 847 bis 857, beschrieben. Weitere für das erfindungsgemäße Verfahren geeignete aromatische di-, tri- und tetrafunktionelle Säuren sowie deren inter- und intramolekularen Anhydride sind beispielsweise in DE-A-28 01 701 beschrieben. Die Säuren und/oder deren Anhydride, welche gegebenenfalls durch OH-, SH-, oder NH₂-Gruppen substituiert sein können, werden bevorzugt der Polyolkomponente zugesetzt. Tetrafunktionelle Carbonsäuren bzw. deren intramolekularen Anhydride sind für das erfindungsgemäße Verfahren nicht bevorzugt. Diese Verbindungen können jedoch in bestimmten Fällen nach chemischer Modifizierung interessant sein. So kann beispielsweise aus Trimellithsäure-1,2-anhydrid ein intermolekulares Anhydrid hergestellt werden. Weiterhin können aus Trimellithsäure-1,2-anhydrid mit Glykolen, Glykolsäure, Glycerin und trifunktionellen Polyolen durch Modifizierung der Carboxylgruppen für das erfindungsgemäße Verfahren geeignete Zwischenprodukte hergestellt werden. Die beiden Anhydridgruppen können auch mit aliphatischen und/oder aromatischen Aminen zu Amiden oder Imiden umgesetzt werden. Als Amine können beispielsweise Polyetheramine eingesetzt werden. Möglich ist auch der Einsatz von aliphatischen Diaminen mit 2 bis 6 Kohlenstoffatomen und/oder Alkanolaminen und/oder p-Aminobenzoesäure als Modifizierungsmittel.

Eine weitere Möglichkeit der Modifizierung ist die Ringöffnung von intramolekularen Dianhydriden.
a) Als organische Polyisocyanate kommen die an sich bekannten aliphatischen, cycloaliphatischen, araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, araliphatische Diisocyanate wie z.B. m-, p-Xylylen-diisocyanat und Xylylen-diisocyanat-Isomerenmischungen und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI), Mischungen aus Roh-MDI und Toluylen-diisocyanaten, 1,4- und 1,5-Naphthylendiisocyanat, 3,3'-Dimethyl-diphenyl-4,4'-diisocyanat, 1,2-Diphenylethan-diisocyanat und Phenylen-diisocyanat. Die organischen Di- und Polyisocyanate können einzeln oder in Form von Mischungen eingesetzt werden.
   Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Urethonimin - und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Alkanoldiolen, Triolen, Dialkylenglykolen, Trialkylenglykolen oder Polyoxyalkylenglykolen mit Molekulargewichten bis 6.000 modifiziertes 4,4'-Diphenylmethan-diisocyanat, modifizierte 4,4'- und 2,4'-Diphenylmethan-diisocyanatmischungen, oder modifiziertes Roh-MDI oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 14 bis 1,5 Gew.-%, vorzugsweise von 8 bis 2,5 Gew.-%, bezogen auf das Gesamtgewicht, hergestellt aus den nachfolgend beschriebenen Polyester- und/oder vorzugsweise Polyether-polyolen und 1,4- und 1,5-Naphthylen-diisocyanat, 3,3'-Dimethyl-diphenyl-4,4'-diisocyanat, 1,2-Diphenylethan-diisocyanat, Phenylendiisocyanat und 4,4'-Diphenylmethan-diisocyanat, Mischungen aus 2,4'- und 4,4'-Diphenylmethan-diisocyanat, 2,4- und/oder 2,6-Toluylendiisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.
   Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.
   Besonders bewährt haben sich als organische Polyisocyanate und kommen vorzugsweise zur Anwendung zur Herstellung von zelligen Elastomeren: NCO-Gruppen enthaltende Prepolymere mit einem NCO-Gehalt von 14 bis 9 Gew.-%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.-%, insbesondere auf Basis von 4,4'-Diphenylmethan-diisocyanat oder Diphenylmethan-diisocyanat-Isomerengemischen, zur Herstellung von flexiblen Polyurethanschaumstoffen: Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI und zur Herstellung von Polyurethan- oder Polyurethan-Polyisocyanurat-Hartschaumstoffen: Roh-MDI.
b) Als Verbindungen b) werden Polyester-polyole und/oder Polyether-polyole verwendet, zweckmäßigerweise solche mit einer Funktionalität von 2 bis 8, vorzugsweise 2 bis 6 und einem Molekulargewicht von 500 bis 9.000.
   Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono - und -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar - und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Alkandiole und Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Zur Herstellung foggingarmer PU-Formkörper werden die Polyester-polyole vor ihrer Verwendung zweckmäßigerweise einer Destillation bei Temperaturen von 140 bis 280°C und unter vermindertem Druck von 0,05 bis 30 mbar, z.B. einer Dünnschichtdestillation, zur Abtrennung flüchtiger Bestandteile unterworfen.
   Die erhaltenen Polyester-polyole besitzen vorzugsweise eine Funktionalität von 2 bis 4, insbesondere 2 bis 3 und ein Molekulargewicht von 500 bis 3.000, vorzugsweise 1.200 bis 3.000 und insbesondere 1.800 bis 2.500.
   Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4, 3,4- und 2,6-Toluylendiamin und 4,4'-, 2,4'- und 2,2'-Diamino-diphenylmethan.
   Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin und Trialkanolamine wie z.B. Triethanolamin und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.
   Die Polyether-polyole, vorzugsweise Polyoxypropylen- und Polyoxypropylen-polyoxyethylen-polyole, besitzen zur Herstellung von flexiblen Formkörpern eine Funktionalität von vorzugsweise 2 bis 3 und insbesondere 2 bis 2,6 und Molekulargewichte von 1.800 bis 9.000, vorzugsweise 2.000 bis 6.500 und insbesondere 2.400 bis 5.200 und zur Herstellung von steifen, harten Formkörpern eine Funktionalität von vorzugsweise 3 bis 8, insbesondere 3 bis 6 und Molekulargewichte von 500 bis 2.400, vorzugsweise 600 bis 1.800 und insbesondere 600 bis 1.500 und geeignete Polyoxytetramethylen-glykole ein Molekulargewicht bis ungefähr 3.500.
   Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyether-polyole können ebenso wie die Polyester-polyole einzeln oder in Form von Mischungen verwendet werden. Ferner können sie mit den Pfropf-polyether-polyolen oder Polyester-polyolen sowie den hydroxylgruppenhaltigen Polyesteramiden, Polyacetalen, Polycarbonaten und/oder Polyether-polyaminen gemischt werden.
   Zu den Verbindungen b) zählen auch difunktionelle Kettenverlängerungs- und/oder tri- und höherfunktionelle Vernetzungsmittel. Zur Modifizierung der mechanischen Eigenschaften, z.B. der Härte, kann sich der Zusatz von Kettenverlängerungsmitteln, Vernetzungsmitteln oder gegebenenfalls auch Gemischen davon als vorteilhaft erweisen. Zur Herstellung von kompakten und zelligen PU- oder PU-PH-Elastomeren, thermoplastischen Polyurethanen und flexiblen, weichelastischen PU-Schaumstoffen werden zweckmäßigerweise Kettenverlängerungsmittel und gegebenenfalls Vernetzungsmittel mitverwendet. Als Kettenverlängerungs- und/oder Vernetzungsmittel verwendet werden Diole und/oder Triole mit Molekulargewichten kleiner als 500, vorzugsweise von 60 bis 300. In Betracht kommen beispielsweise Dialkylenglykole und aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Zur Herstellung zelliger Polyurethan (PU)-Polyharnstoff(PH)-Elastomerer können neben den obengenannten Diolen und/oder Triolen oder im Gemisch mit diesen als Kettenverlängerungsoder Vernetzungsmittel auch sekundäre aromatische Diamine, primäre aromatische Diamine, 3,3'-di- und/oder 3,3'-, 5, 5'-tetraalkylsubstituierte Diamino-diphenylmethane Anwendung finden.
   Die genannten Kettenverlängerungsmittel und/oder Vernetzungsmittel können einzeln oder als Mischungen von gleichen oder verschiedenen Verbindungsarten verwendet werden.
   Sofern Kettenverlängerungs, Vernetzungsmittel oder Mischungen davon Anwendung finden, kommen diese zweckmäßigerweise in Mengen von 2 bis 60 Gew.-%, vorzugsweise 8 bis 50 Gew.-% und insbesondere 10 bis 40 Gew.-%, bezogen auf das Gewicht der Komponente (b) zum Einsatz.
c) Als Treibmittel c) werden die die oben beschriebenen Carbodiimidkatalysatoren c1) und c2) eingesetzt.
d) Als Katalysatoren (d) zur Katalyse der Polyisocyanat-Polyaddition werden insbesondere Verbindungen verwendet, die die Reaktion der Hydroxylgruppen enthaltenden Verbindungen der Komponente (b) und gegebenenfalls (c) mit der organischen, gegebenenfalls modifizierten Polyisocyanaten (a) stark beschleunigen. In Betracht kommen organische Metallverbindungen, vorzugsweise organische zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinndilaurat, Dibutylzinnmaleat und Dioctylzinn-diacetat. Als gut geeignet haben sich auch Zialkylzinn(IV)-mercaptoverbindungen erwiesen, wie z.B. Bislaurylzinn(IV)-dimercaptid, und Verbindungen der allgemeinen Formeln R₂Sn(SR'-O-CO-R'')₂ oder R₂Sn(SR'-CO-OR'')₂, in denen R einen Alkylrest mit mindestens 8 Kohlenstoffatomen, R' einen Alkylrest mit mindestens 2 Kohlenstoffatomen und R'' einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis/thioethylenglykol-2-ethylhexoat), Dioctylzinn-bis(thioethylen-glykollaurat), Dioctylzinn-bis(thiolatoessigsäure-2-ethylehxylester, Dioctylzinn-bis(thiolatoessigsäurehexylester) und Dioctylzinn-bis(thiolatoessigsäurelaurylester. Als Katalysatoren sehr gut bewährt haben sich ferner Organozinnverbindungen mit Zinn-Sauerstoff- oder Zinn-Schwefel-Bindungen, wie sie beispielsweise in der DD-A-255 535 beschrieben werden, der allgemeinen Formeln (R₃Sn)₂O, R₂SnS, (R₃Sn)₂S, R₂Sn(SR')₂ oder RSn(SR')₃, in denen R und R' Alkylgruppen darstellen, die 4 bis 8 Kohlenstoffatome bei R sowie 4 bis 12 Kohlenstoffatome bei R' enthalten und R' außerdem die Reste -R''COOR'' und -R''OCOR''' bedeuten kann, in denen R" Alkylgruppen mit 1 bis 6 Kohlenstoffatomen und R''' Alkylengruppen mit 4 bis 12 Kohlenstoffatomen sind. Als Beispiele hierfür seien genannt: Bis(tributylzinn)oxid, Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethyl-hexyl-ester), Dioctylzinn-bis(thioethylenglykol-2-ethyl-hexoat) und Dibutylzinn-bis(thioethylenglykollaurat).
   Die organischen Metallverbindungen können als Katalysatoren einzeln oder in Form von Katalysatorkombinationen eingesetzt werden. Als äußerst vorteilhaft hat sich eine Kombination erwiesen, die besteht aus Di-n-octylzinn-bis-(2-ethylhexylthioglykolat) und Mono-n-octylzinn-tris-(2-ethylhexylthioglykolat), vorteilhafterweise im Gewichtsverhältnis 70:30 bis 30:70 oder 94:6.
   Die organischen Metallverbindungen können alleine oder in Kombination mit stark basischen Aminen verwendet werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',M'-Tetramethyl-ethylendiamin, N,N,N',N'-Tetramethyl-butandiamin, N,N,N',N'-Tetramethyl-diaminodicyclohexylmethan, Pentamethy-diethylentriamin, Tetramethyl-diaminoethylether, Bis-(dimethylaminopropyl)-harnstoff, Dimethylpiperazin, 1,2-Dimethylimidazol, 1-Aza-bi-cyclo-(3,30)-octan und vorzugsweise 1,4-Diaza-Bicyclo-(2,2,2)-otan und Alkanolaminverbindungen, wie Triethanolamin, Triisopropanolamin, N-Methyl- und N-Ethyl-diethanolamin und Dimethylethanolamin. Bevorzugte Katalysatoren sind 1-Methylimidazol sowie alkylsubstituierte Imidazole. Geeignete Imidazole sind beschrieben in Dissociation Constants, London Butterworths, 1965, Seiten 190 ff sowie Seite 87 ff. Insbesondere bei Verwendung eines Polyisocyanatüberschusses kommen als Katalysatoren ferner in Betracht: Tris-(dialkylaminoalkyl)s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat, Alkaliformiate und -acetate, wie z.B. Kaliumformiat und Kaliumacetat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).
e) Zur Herstellung der selbsttrennenden, kompakten oder zelligen, gegebenenfalls Verstärkungsmittel enthaltenden Formkörpern aus Polyisocyanat-Polyadditionsprodukten kann es aus verfahrenstechnischen oder systemspezifischen Gründen zweckmäßig sein, zusätzliche Hilfsmittel mit zu verwenden. Hierfür in Betracht kommen beispielsweise zusätzliche äußere und/oder innere Trennmittel, oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatische und bakteriostatisch wirkende Substanzen oder Mischungen davon sowie insbesondere zur Herstellung von Formkörpern mit einer verdichteten Randzone und einem zelligen Kern unter Einsatz von Wasser als Treibmittel in einem geschlossenen Formwerkzeug unter Verdichtung mikroporöse Aktivkohle und/oder mikroporöse Kohlenstoffmolekularsiebe gemäß US-A-5 254 597, kristalline, mikroporöse Molekularsiebe und/oder kristallines Siliciumoxid gemäß US-A-5 110 834, amorphe mikroporöse Kieselgel gemäß EP-A-0 513 573, Konzentrate aus Polyhydroxylverbindungen und Ammoniumcarbonat und/oder Salze aus Aminen und Kohlendioxid.
   Als Trennmittel eignen sich beispielsweise Metallsalze der Stearinsäure, die aus handelsüblicher Stearinsäure hergestellt werden können, und die, ohne daß die Trennwirkung signifikant beeinträchtigt wird, bis zu 10 Gew.-%, vorzugsweise bis zu 5 Gew.-%, gegebenenfalls ungesättigte Carbonsäuren mit 8 bis 24 C-Atomen, wie z.B. Palmitinsäure, Ölsäure, Ricinolsäure u.a. enthalten kann.
   Als Metalle für die Bildung der Metallsalze der Stearinsäure finden beispielsweise Alkalimetalle, vorzugsweise Natrium und Kalium, Erdalkalimetalle, vorzugsweise Magnesium und Calcium und insbesondere Zink Verwendung. Vorzugsweise werden als Metallsalze der Stearinsäure Zinkstearat, Calciumstearat und Natriumstearat oder Mischungen aus mindestens zwei Stearaten eingesetzt. Insbesondere verwendet wird eine Mischung aus Zink-, Calcium- und Natriumstearat.
   Sofern sich die zusätzliche Mitverwendung der Metallsalze der Stearinsäure als Trennmittel als vorteilhaft erweist, werden die Metallstearate zweckmäßigerweise in einer Menge bis 12 Gew.-%, vorzugsweise von 0,1 bis 8 Gew.-%, bezogen auf das Gewicht der höhermolekularen Verbindungen mit mindestens zwei reaktiven Wasserstoffatomen (b) eingesetzt.
   Als Trennmittel sehr gut geeignet sind auch Carbonsäureamide und/oder -Imide, wie sie in WO 97/21747 beschrieben sind.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 10 Gew.-Teile der Komponente (b), angewandt.
   Als Gleitmittel hat sich der Zusatz eines Ricinolsäurepolyesters mit einem Molekulargewicht von 1.500 bis 3.500, vorzugsweise von 2.000 bis 3.000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.
   Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe, wie z.B. Glaskugeln, silikatische Mineralien, beispielsweise Schichtsilikate wie Antigorit, Serpentin, Hornblenden, Amphibole, Chrisotil, Talkum, Wollastonit, Glimmer und synthetische Silikate wie z.B. Magnesiumaluminiumsilikat (Transpafill®); Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid und Zinksulfid. Als organische Füllstoffe kommen beispielsweise in Betracht: Ruß, Melamin, Kollophonium, Cyclopentadienylharze und Pfropfpolymerisate. Die Füllstoffe können sowohl einzeln als auch in geeigneten Kombinationen untereinander oder miteinander eingesetzt werden. Verwendbar sind ferner Füllstoffe in Verbindung mit Verstärkungsmitteln.
   Die anorganischen und/oder organischen Füllstoffe können der Reaktionsmischung einverleibt werden, wobei sie, sofern sie überhaupt mitverwendet werden, vorteilhafterweise in einer Menge von 0,5 bis 50 Gew.-%, vorzugsweise 1 bis 40 Gew.-%, bezogen auf das Gewicht der Komponenten (a) bis (c) eingesetzt werden.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.
   Nähere Angaben über die oben genannten anderen üblichen Hilfs- und Zusatzstoffe sind der Fachliteratur, beispielsweise der Monographie von J.H. Saunders und K.C. Frisch, "High Polymers", Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1., 2. und 3. Auflage, 1966, 1983 und 1993, zu entnehmen.

Zur Herstellung der kompakten oder zelligen Formkörper können die organischen, gegebenenfalls modifizierten Polyisocyanate (a), Verbindungen mit mindestens zwei reaktiven Wasserstoffatomen (b) in solchen Mengen zu Umsetzung gebracht werden, daß das Äquivalenz-Verhältnis von NCO-Gruppen der Polyisocyanate (a) zur Summe der reaktiven Wasserstoffatome der Komponente (b) 0,85 bis 1,50:1, vorzugsweise 0,95 bis 1,15:1 und insbesondere 1,0 bis 1,1:1 beträgt.

Die erfindungsgemäßen zelligen Formkörper aus Polyisocyanat-Polyadditionsprodukten, können nach dem Prepolymer-Verfahren oder vorzugsweise nach dem one shot-Verfahren mit Hilfe der Niederdrucktechnik oder der Hochdrucktechnik vorzugsweise in geschlossenen, zweckmäßigerweise temperierbaren Formwerkzeugen, beispielsweise metallischen Formwerkzeugen, z.B. aus Aluminium, Gußeisen oder Stahl oder Formwerkzeugen aus faserverstärkten Polyester- oder Epoxidformmassen hergestellt werden.

Zellige Polyurethane oder Elastomeren werden insbesondere mittels der Reaktionsspritzgußtechnik (RIM-Technik) hergestellt. Diese Verfahrensweisen werden beispielsweise beschrieben von Piechota und Röhr in "Integralschaumstoff", Carl-Hanser-Verlag, München, Wien, 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponentenverfahren zu arbeiten und die Aufbaukomponenten (b), (c) und (d) sowie (e) in der Komponente (A) zu vereinigen und als Komponente (B) die organischen Polyisocyanate, gegebenenfalls Treibmittel (c) zu verwenden.

Die Ausgangskomponenten können bei einer Temperatur von 15 bis 80°C, vorzugsweise 20 bis 55°C gemischt und in ein offenes oder geschlossenes Formwerkzeug, das zur Herstellung von verstärkten Formkörpern zuvor mit Geweben, Matten, Filzen, Vliesen und/oder Glegen als Verstärkungsmittel ausgelegt werden kann, eingefüllt werden. Zur Herstellung von Integralschaumstoffen und zelligen oder kompakten Elastomeren kann die Reaktionsmischung unter erhöhtem Druck in das geschlossene Formwerkzeug eingebracht werden.

Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Sofern die Formkörper in einem geschlossenen Formwerkzeug unter Verdichtung, z.B. zur Ausbildung einer kompakten Randzone und einem zelligen Formkörperkern, hergestellt werden, hat es sich als zweckmäßig erwiesen, Verdichtungsgrade im Bereich von 1,2 bis 8,3 vorzugsweise 1,6 bis 6,0 und insbesondere 2,0 bis 4,0 anzuwenden.

Die nach dem erfindungsgemäßen Verfahren hergestellten zelligen Elastomeren besitzen Dichten von ungefähr 0,76 bis 1,1 g/cm³, vorzugsweise von 0,9 bis 1,0 g/cm³, wobei die Dichte von flüllstoffhaltigen und/oder insbesondere mit Glasmatten verstärkten Produkten höhere Werte, z.B. bis 1,4 g/cm³ und mehr erreichen kann. Formkörper aus derartigen zelligen Elastomeren finden z.B. Verwendung in der Automobilindustrie, beispielsweise im Automobilinnenraum als Verkleidungsteile, Hutablagen, Kofferraumabdeckung, Armaturentafeln, Lenkräder und Kopfstützen, und als Außenteile, wie z.B. Heckspoiler, Regenrinnen und Stoßfänger sowie als Laufrollen.

Die nach dem erfindungsgemäßen Verfahren hergestellten weichelastischen, halbharten und harten Polyurethan-Integralschaumstoff-Formkörper weisen eine Dichte von 0,025 bis 0,75 g/cm³ auf, wobei die Dichten der PU-Formschaumstoffe vorzugsweise 0,03 bis 0,24 g/cm³ und insbesondere 0,03 bis 0,1 g/cm³ und die Dichten der PU-Integralschaumstoff-Formkörper vorzugsweise 0,08 bis 0,75. g/cm³ und insbesondere 0,24 bis 0,6 g/cm³ betragen. Die PU-Schaumstoff- und PU-Integralschaumstoff-Formkörper werden z.B. verwendet in der Fahrzeug-, z.B. Automobil-, Flugzeug- und Schiffbauindustrie, der Möbel- und Sportartikelindustrie als beispielsweise Polstermaterialien, z.B. Auto-, Motorrad- oder Traktorensitze, als Kopfstützen, Verkleidungselemente, Gehäuseteile, Konsolen, Skikern, Skiinnenschutz, Dachrahmen und Fertighimmel in Verkehrsmitteln und Fensterrahmen.

Die Erfindung soll an nachstehenden Beispielen näher erläutert werden

### Beispiel 1 (Vergleich)

### A-Komponente:

| | Mischung, bestehend aus |
|---|---|
| 79,00 | Gew.-Teilen eines mit Glycerin gestarteten Polyoxypropylen (86,0 Gew.-%) -polyoxyethylen (14 Gew.-%) -polyols mit der Hydroxylzahl 28, |
| 5,00 | Gew.-Teilen eines Pfropf-polyether-polyols mit einer Hydroxylzahl von 25, hergestellt aus einem Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Lupranol® 4100 der BASF). |
| 8,00 | Gew.-Teilen Ethylenglykol, |
| 1,5 | Gew.-Teilen 1-Methyl-imidazol, |
| 3,5 | Gew.-Teilen 1-Methyl-phospholen-1-oxid-Isomerengemisch der Hoechst AG, Werk Knapsack, BRD, (Mischung aus 1-Methyl-2-phospholen-1-oxid und 1-Methylen-2-phospholen-1-oxid), |
| 3,0 | Gew.-Teilen Schwarzpaste (bestehend aus 30 % Ruß und 70 % Dioktylphthalat). |

### B-Komponente:

| | Mischung bestehend aus |
|---|---|
| 60 | Gew.-Teilen einer Mischung aus 50 Gew.-Teilen 4,4'-Diphenylmethan-diisocyanate und 50 Gew.-Teilen 2,4-Diphenylmethan-diisocyanate mit einem NCO-Gehalt von 33,5 Gew.-% und |
| 40 | Gew.-Teilen einer Mischung enthaltend 4,4'-, 2,2'-Diphenylmethan-diisocyanate und Polyphenyl-polymethylen-polyisocyanate (= Roh-MDI). Die Gesamtmischung der B-Komponente hat einen NCO-Gehalt von 32,6 Gew.-%. |

### Versuchsdurchführung:

100 Gew.-Teile der A-Komponente und 41,1 Gew.-Teile der B-Komponente wurden bei 22°C nach dem Reaktionsspritzverfahren auf einer Hochdruckdosieranlage vom Typ Puromat® 80/40 der Firma Elastogran Polyurethan GmbH, Geschäftsbereich Maschinenbau, 8021 Straßbach, BRD, gemischt und in ein auf 45°C temperiertes metallisches Formwerkzeug mit der Raumform eines Automobillenkrades in einer solchen Menge eingebracht, daß sich beim Aufschäumen ein Verdichtungsgrad von 2,5 einstellte.

Der Formkörper wurde nach 3 Minuten entformt. Er besaß einen zelligen Kern und eine kompakte Haut und eine fast porenfreie Oberfläche. Die Shore-A-Härte betrug 51 - 53. Bei der Versuchsdurchführung wurde ein schlechter Fließweg festgestellt. Außerdem wurde festgestellt, daß insbesondere bei Airbag Lenkrädern eine unerwünschte Welligkeit eintrat. Bei Verschäumung der Reaktionsmischung in einem offenen Formwerkzeug erhielt man eine Startzeit von 7 Sekunden, die Steigzeit betrug 33 Sekunden. Die Rohdichte des Schaumkörpers betrug 198 kg/m³.

### Beispiel 2 (Vergleich)

### A-Komponente:

| | Mischung, bestehend aus |
|---|---|
| 78,90 | Gew.-Teilen eines mit Glycerin gestarteten Polyoxypropylen (86,0 Gew.-%) -polyoxyethylen (14 Gew.-%) -polyols mit der Hydroxyzahl 28, |
| 5,00 | Gew.-Teilen eines Pfropf-polyether-polyols gemäß Vergleichsbeispiel 1, |
| 7,20 | Gew.-Teilen Ethylenglykol, |
| 1,3 | Gew.-Teilen 1-Methyl-imidazol, |
| 4,6 | Gew.-Teilen Äpfelsäure (50 Gew.-%ig gelöst in Ethylenglykol), |
| 3,0 | Gew.-Teilen Schwarzpaste (bestehend aus 30 % Ruß und 70 % Dioktylphthalat). |

### B-Komponente:

### Analog Beispiel 1

### Versuchsdurchführung:

100 Gew.-Teile der A-Komponente und 47,9 Gew.-Teile der B-Komponente wurden analog dem Vergleichsbeispiel 1 zu einem Lenkrad verarbeitet. Der Verdichtungsgrad betrug 2,6. Die Entformzeit betrug 5 Minuten. Der Formkörper besaß einen zelligen Kern mit einer sichtbaren Hautausbildung. Das Lenkrad zeigte trotz der hautausbildung eine miniporige Oberfläche, es zeigte nach 24 Stunden die erforderliche Dimensionsstabilität. Der Shore-A-Härte betrug 62 - 65. Das Fließverhalten ist besser als im Vergleichsbeispiel 1. Bei Verschäumung der Reaktionsmischung in einem offenem Formwerkzeug erhielt man eine Startzeit von 6 Sekunden, und eine Steigzeit von 46 Sekunden. Die Rohdichte des Schaumkörpers betrug 193 kg/m³.

### Beispiel 3 (Vergleich)

### A-Komponente:

| | Mischung, bestehend aus |
|---|---|
| 78,80 | Gew.-Teilen eines mit Glycerin gestarteten Polyoxypropylen (86,0 Gew.-%) -polyoxyethylen (14 Gew.-%) -polyols mit der Hydroxyzahl 28, |
| 5,00 | Gew.-Teilen eines Pfropf-polyether-polyols gemäß Vergleichsbeispiel 1 und 2, |
| 5,7 | Gew.-Teilen Ethylenglykol, |
| 2,0 | Gew.-Teilen 1-Methyl-imidazol, |
| 5,5 | Gew.-Teilen Zitronensäure (30 Gew.-% in Ethylenglykol), |
| 3,0 | Gew.-Teilen Schwarzpaste (bestehend aus 30 % Ruß und 70 % Dioktylphthalat). |

### B-Komponente:

### Analog Beispiel 1 und 2

### Versuchsdurchführung:

100 Gew.-Teile der A-Komponente und 48,1 Gew.-Teile der B-Komponente wurden analog dem Beispiel 1 und Beispiel 2 zu einem Lenkrad verarbeitet. Der Verdichtungsgrad betrug 2,6. Die Entformzeit betrug 4 Minuten. Der Formkörper besaß einen zelligen Kern mit guter Hautausbildung. Das Fließverhalten und die Porosität sind analog zu Beispiel 2. Die erforderliche Dimensionsstabilität nach 24 Stunden ist vorhanden. Bei Verschäumung der Reaktionsmischung in einem offenen Formwerkzeug erhielt eine Startzeit von 5 Sekunden, die Steigzeit betrug 37 Sekunden. Die Rohdichte des Schaumkörpers betrug 194 kg/m³. Die Shore-A-Härte betrug 57 - 59.

### Beispiel 4

### A-Komponente:

| | Mischung, bestehend aus |
|---|---|
| 78,65 | Gew.-Teilen eines mit Glycerin gestarteten Polyoxypropylen (86,0 Gew.-%) -polyoxyethylen (14 Gew.-%) -polyols mit der Hydroxyzahl 28, |
| 5,00 | Gew.-Teilen eines Pfropfpolyols gemäß Beispiel 1 bis 3, OH-Zahl 25, |
| 6,35 | Gew.-Teilen Ethylenglykol, |
| 0,5 | Gew.-Teilen 1-Methyl-Phospholen-1-oxid-Isomerengemisch der Hoechst AG, Werk Knapsack, BRD, (Mischung aus 1-Methyl-3-phospholen-1-oxid und 1-Methyl-2-phospholen-1-oxid), |
| 2,0 | Gew.-Teilen 1-Methyl-imidazol, |
| 4,5 | Gew.-Teilen Zitronensäure (30 Gew.-%ig in Ethylenglykol), |
| 3,0 | Gew.-Teilen Schwarzpaste (bestehend aus 30 % Ruß und 70 % Dioktylphthalat). |

### B-Komponente:

### Analog Beispiel 1 bis 3

### Versuchsdurchführung:

100 Gew.-Teile der A-Komponente und 47,8 Gew.-Teile der B-Komponente wurden analog den Vergleichsbeispielen zu einem Lenkrad verarbeitet. Der Verdichtungsgrad betrug 2,7. Die Entformzeit betrug 3,5 Minuten. Der Formkörper besaß einen zelligen Kern mit guter Hautausbildung. Das Fließverhalten war sehr gut. Die Dimensionsstabilität nach 24 Stunden war für einen Produktionsprozeß noch nicht gut genug. Die Shore-A-Härte betrug 46 - 50. Trotz der guten Hautausbildung waren an dem Lenkrad an einigen Stellen noch Mikroporen vorhanden. Bei Verschäumung in einen offenen Formwerkzeug wurde eine Startzeit von 4 Sekunden sowie eine Steigzeit von 31 Sekunden gemessen. Die Rohdichte des Schaumkörpers betrug 184 kg/m³.

### Beispiel 5

### A-Komponente:

| | Mischung, bestehend aus |
|---|---|
| 78,65 | Gew.-Teilen eines mit Glycerin gestarteten Polyoxypropylen (86,0 Gew.-%) -polyoxyethylen (14 Gew.-%) -polyols mit der Hydroxyzahl 28, |
| 5,00 | Gew.-Teilen eines Pfropfpolyols gemäß Beispiel 1 bis 3, OH-Zahl 25, |
| 6,35 | Gew.-Teilen Ethylenglykol, |
| 0,5 | Gew.-Teilen 1-Methyl-Phospholen-1-oxid-Isomerengemisch der Hoechst AG, Werk Knapsack, BRD, (Mischung aus 1-Methyl-3-phospholen-1-oxid und 1-Methyl-2-phospholen-1-oxid), |
| 2,0 | Gew.-Teilen 1-Methyl-imidazol, |
| 4,5 | Gew.-Teilen Zitronensäure (30 Gew.-%ig in Ethylenglykol), |
| 3,0 | Gew.-Teilen Schwarzpaste (bestehend aus 30 % Ruß und 70 % Dioktylphthalat). |

### B-Komponente:

| | Mischung, bestehend aus |
|---|---|
| 75 | Gew.-Teilen einer Carbodiimidgruppen enthaltenen Polyisocyanatmischung mit einem NCO-Gehalt von 29,5 Gew.-%, hergestellt durch partielle Carbodiimidisierung von 4,4'-Diphenyl-methan-diisocyanat und |
| 25 | Gew.-Teilen eines Propolymeren, welches hergestellt wurde aus 87,01 Gew.-Teilen 4,4'-Diphenylmethan-diisocyanat und 8,14 Gew.-Teilen Dipropylenglykol und 4,85 Gew.-Teilen eines Polyoxypropylenpolyols, welches mit 1,2-Propylenglykol gestartet wurde, mit einer OH-Zahl von 250, mit einem NCO-Gehalt von 23 Gew.-%. Die Mischung hatte einen Gesamt NCO-Gehalt von 27,8 Gew.-%. |

### Versuchsdurchführung:

100 Gew.-Teile der A-Komponente und 56,3 Gew.-Teile der B-Komponente wurden analog den Vergleichsbeispielen zu einem Lenkrad verarbeitet. Der Verdichtungsgrad betrug 2,8. Die Entformzeit betrug 3 Minuten. Der Formkörper besaß einen zelligen Kern mit guter Hautausbildung. Das Fließverhalten war sehr gut. Die geforderte Dimensionsstabilität war sofort nach dem Entformen gewährleistet. Der Schrumpf nach 24 Stunden war in Ordnung (keine Welligkeit). Die Shore-A-Härte betrug 61 - 63. Die Hautausbildung war gut, am Lenkrad waren noch Mikroporen vorhanden. Bei Verschäumung in einem offenen Formwerkzeug wurde eine Startzeit von 4 Sekunden sowie eine Steigzeit von 31 Sekunden gemessen. Die Rohdichte des Schaumkörpers betrug 180 kg/m³.

### Beispiel 6

### A-Komponente:

| | Mischung, bestehend aus |
|---|---|
| 79,0 | Gew.-Teilen eines mit Glycerin gestarteten Polyoxypropylen (86,0 Gew.-%) -polyoxyethylen (14 Gew.-%) -polyols mit der Hydroxyzahl 28, |
| 5,00 | Gew.-Teilen eines Pfropfpolyols gemäß Beispiel 4, OH-Zahl 25, |
| 8,65 | Gew.-Teilen Ethylenglykol, |
| 1,7 | Gew.-Teilen 1-Methyl-imidazol, |
| 0,75 | Gew.-Teilen 1-Methyl-Phospholen-1-oxid-Isomerengemisch der Hoechst AG, Werk Knapsack, BRD, (Mischung aus 1-Methyl-3-phospholen-1-oxid und 1-Methyl-2-phospholen-1-oxid), |
| 1,7 | Gew.-Teilen Äpfelsäure (50 Gew.-%ig in Ethylenglykol), |
| 3,0 | Gew.-Teilen Schwarzpaste (bestehend aus 30 % Ruß und 70 % Dioktylphthalat), |
| 0,2 | Gew.-Teile Wasser. |

### B-Komponente:

| | Mischung, bestehend aus |
|---|---|
| 75 | Gew.-Teilen einer Carbodiimidgruppen enthaltenen Polyisocyanatmischung mit einem NCO-Gehalt von 29,5 Gew.-%, hergestellt durch partielle Carbodiimidisierung von 4,4'-Diphenyl-methan-diisocyanat und |
| 25 | Gew.-Teilen eines Propolymeren, welches hergestellt wurde aus 87,01 Gew.-Teilen 4,4'-Diphenylmethan-diisocyanat und 8,14 Gew.-Teilen Dipropylenglykol und 4,85 Gew.-Teilen eines Polyoxypropylenpolyols, welches mit 1,2-Propylenglykol gestartet wurde, mit einer OH-Zahl von 250, mit einem NCO-Gehalt von 23 Gew.-%. Die Mischung hatte einen Gesamt NCO-Gehalt von 27,8 Gew.-%. |

### Versuchsdurchführung:

100 Gew.-Teile der A-Komponente und 59,9 Gew.-Teile der B-Komponente wurden bei 22°C nach dem Reaktionsspritzverfahren auf einer Hochdruckdosieranlage vom Typ Puromat® 80/40 der Firma Elastogran Polyurethan GmbH, Geschäftsbereich Maschinenbau, 8021 Straßbach, BRD, gemischt und in ein auf 45°C temperiertes metallisches Formwerkzeug mit der Raumform eines Automobillenkrades in eine auf 45°C temperiertes metallisches Formwerkzeug mit der Raumform eines Automobillenkrades in einer solchen Menge eingebracht, daß sich beim Aufschäumen ein Verdichtungsgrad von 2,7 einstellte.

Der Formkörper wurde nach 3 Minuten entformt. Er besaß einen zelligen Kern, eine kompakte Oberfläche, eine sehr gute Haut. Die geforderte Dimensionsstabilität war sofort nach dem Entformen gewährleistet. Der Schrumpf nach 24 Stunden war in Ordnung (keine Welligkeit). Die Oberfläche hatte vereinzelt kleine Poren. Beim Verschäumen der Reaktionsmischung in einem offenem Werkzeug erhielt man eine Startzeit von 6 Sekunden, die Steigzeit betrug 34 Sekunden. Die Rohdichte betrug 188 kg/m³. Die Shore-A-Härte betrug 72 - 74.

### Beispiel 7

### A-Komponente:

| | Mischung, bestehend aus |
|---|---|
| 79,25 | Gew.-Teilen eines mit Glycerin gestarteten Polyoxypropylen (86,0 Gew.-%) -polyoxyethylen (14 Gew.-%) -polyols mit der OH-Zahl 28, |
| 5,00 | Gew.-Teilen eines Pfropf-polyether-polyols mit einer Hydroxylzahl von 25, gemäß Beispiel 5, |
| 8,10 | Gew.-Teilen Ethylenglykol, |
| 1,7 | Gew.-Teilen 1-Methylimidazol, |
| 0,75 | Gew.-Teilen 1-Methyl-phospholen-1-oxid-Isomerengemisch der Hoechst AG, Werk Knapsack, BRD, (Mischung aus 1-Methyl-3-phospholen-1-oxid und 1-Methyl-2-phospholen-1-oxid), |
| 2,0 | Gew.-Teilen Zitronensäure (30 Gew.-%ig in Ethylenglykol), |
| 3,0 | Gew.-Teilen Schwarzpaste (bestehend aus 30 % Ruß und 70 % Dioktylphthalat), |
| 0,2 | Gew.-Teile Wasser. |

### B-Komponente:

### Gemäß Beispiel 6

### Versuchsdurchführung:

100 Gew.-Teile der A-Komponente und 59,9 Gew.-Teile der B-Komponente wurden bei 22°C nach dem Reaktionsspritzverfahren auf einer Hochdruckdosieranlage vom Typ Puromat® 80/40 der Firma Elastogran Polyurethan GmbH, Geschäftsbereich Maschinenbau, 8021 Straßbach, BRD, gemischt und in ein auf 45°C temperiertes metallisches Formwerkzeug mit der Raumform eines Automobillenkrades in einer solchen Menge eingebracht, daß sich beim Aufschäumen ein Verdichtungsgrad von 2,5 einstellte.

Der Formkörper wurde nach 3 Minuten entformt. Er besaß einen zelligen Kern, eine kompakte Oberfläche, eine sehr gute Haut. Die geforderte Dimensionsstabilität war sofort nach dem Entformen gewährleistet. Der Schrumpf nach 24 Stunden war in Ordnung (keine Welligkeit). Die Oberfläche hatte vereinzelt kleine Poren. Die Shore-A-Härte betrug 73 - 74. Beim Verschäumen der Reaktionsmischung in einem offenem Werkzeug erhielt man eine Startzeit von 6 Sekunden, die Steigzeit betrug 29 Sekunden. Die Rohdichte betrug 188 kg/m³.

## Patentansprüche

1. Verfahren zur Herstellung von Fluorchlorkohlenwasserstoff-freien weichelastischen, halbharten oder harten Polyurethanformkörpern mit einem zelligen Kern und einer verdichteten Randzone durch Umsetzung von
a) Polyisocyanaten mit
b) Polyester-polyolen und/oder Polyether-polyolen und gegebenenfalls Kettenverlängerungs- und Vernetzungsmitteln,
c) Treibmitteln,
d) Katalysatoren sowie gegebenenfalls
e) Hilfsmitteln und/oder Zusatzstoffen,
**dadurch gekennzeichnet, daß** die Treibmittel c)
c1) mindestens einen Carbodiimid bildenden Katalysator,
c2) mindestens eine Carbonsäure und/oder deren Anhydrid, Amid oder Imid
enthalten.

2. Verfahren nach Anspruch 1, **dadurch gekennzeichnet, daß** als Carbodiimid bildende Katalysatoren Phosphor enthaltende Verbindungen verwendet werden.

3. Verfahren nach Anspruch 1, **dadurch gekennzeichnet, daß** als Phosphor enthaltende, Carbodiimid bildende Katalysatoren fünfgliedrige hetrocyclische Verbindungen mit Phosphor als Heteroatom verwendet werden.

4. Verfahren nach Anspruch 1, **dadurch gekennzeichnet, daß** als Phosphor enthaltende, Carbodiimid bildende Katalysatoren solche der allgemeinen Formeln I bis II, 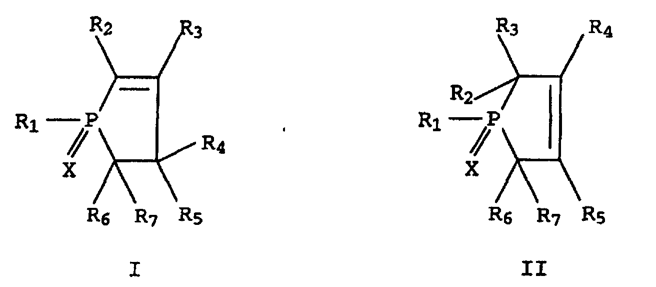 wobei
X Schwefel oder insbesondere Sauerstoff,
R₁ eine substituierte oder unsubstituierte Alkyl-, Phenyl-, Naphtyl- oder Benzylgruppe bedeuten, insbesondere Phenyl- oder Methyl-,
R₂, R₃, R₄, R₅, R₆ und R₇ unabhängig voneinander Wasserstoff, Halogen oder eine C₁- bis C₄-Alkylgruppe bedeuten,
verwendet werden.

5. Verfahren nach Anspruch 1, **dadurch gekennzeichnet, daß** die Phosphor enthaltenden, Carbodiimid bildenden Katalysatoren in einer Menge von 0,1 bis 4,0 Gew.-%, bezogen auf die Summe der Komponenten b) bis e), eingesetzt werden.

6. Verfahren nach Anspruch 1, **dadurch gekennzeichnet, daß** als Carbonsäuren aliphatische Monocarbonsäuren mit 2 bis 8 Kohlenstoffatomen eingesetzt werden.

7. Verfahren nach Anspruch 1, **dadurch gekennzeichnet, daß** als Carbonsäuren aliphatische Dicarbonsäuren eingesetzt werden.

8. Verfahren nach Anspruch 1, **dadurch gekennzeichnet, daß** als Carbonsäuren aromatische Carbonsäuren eingesetzt werden.

9. Verfahren nach Anspruch 1, **dadurch gekennzeichnet, daß** die Carbonsäuren substituiert sind.

10. Verfahren nach Anspruch 1, **dadurch gekennzeichnet, daß** die Carbonsäuren durch Hydroxyl- oder Aminogruppen substituiert sind.

11. Verfahren nach Anspruch 1, **dadurch gekennzeichnet, daß** als Carbonsäuren in-situ aus ihren Ammonium-, Alkalisalzen oder Erdalkalisalzen gebildet werden.

12. Verfahren nach Anspruch 1, **dadurch gekennzeichnet, daß** die Carbonsäuren in Form ihrer intermolekularen oder intramolekularen Anhydride eingesetzt werden.

13. Verfahren nach Anspruch 1, **dadurch gekennzeichnet, daß** die Carbonsäuren in einer Menge von 0,2 bis 10 Gew.-%, bezogen auf die Summe der Komponenten b) bis e), eingesetzt werden.

14. Fluorchlorkohlenwasserstoff-freie weichelstische, halbharte oder harten Polyurethanformkörper mit einem zelligen Kern und einer verdichteten Randzone, herstellbar nach einem der Ansprüche 1 bis 13.

15. Verwendung von Gemischen aus mindestens einem Phosphor enthaltenden, Carbodiimid bildenden Katalysator und mindestens einer Carbonsäure und/oder deren Anhydrid als Treibmittel zur Herstellung von Fluorchlorkohlenwasserstoff-freien weichelastischen, halbharten oder harten Polyurethanformkörper mit einem zelligen Kern und einer verdichteten Randzone.

## Claims

1. A process for producing chlorofluorocarbon-free flexible, semirigid or rigid polyurethane moldings having a cellular core and a compacted surface zone by reacting
a) polyisocyanates with
b) polyester polyols and/or polyether polyols and, if desired, chain extenders and crosslinkers,
c) blowing agents,
d) catalysts and, if desired,
e) auxiliaries and/or additives,
wherein the blowing agents c) comprise
c1) at least one carbodiimide-forming catalyst and
c2) at least one carboxylic acid and/or anhydride, amide or imide of a carboxylic acid.

2. A process as claimed in claim 1, wherein the carbodiimide-forming catalysts used are phosphorus-containing compounds.

3. A process as claimed in claim 1, wherein the phosphorus-containing, carbodiimide-forming catalysts used are five-membered heterocyclic compounds containing phosphorus as heteroatom.

4. A process as claimed in claim 1, wherein the phosphorus-containing, carbodiimide-forming catalysts used are those of the formula I or II, 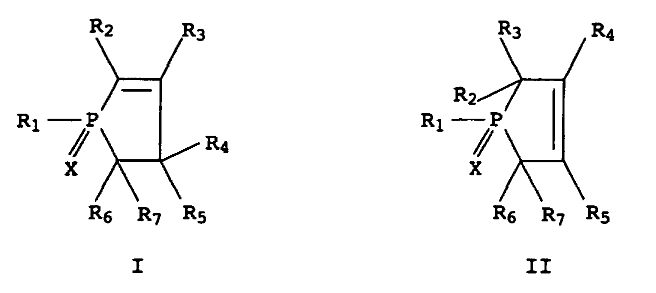 where
X is sulfur or, in particular, oxygen,
R₁ is a substituted or unsubstituted phenyl, naphthyl or benzyl group, in particular phenyl or methyl,
R₂, R₃, R₄, R₅, R₆ and R₇ are each, independently of one another, hydrogen, halogen or a C₁-C₄-alkyl group.

5. A process as claimed in claim 1, wherein the phosphorus-containing, carbodiimide-forming catalysts are used in an amount of from 0.1 to 4.0% by weight, based on the sum of the components b) to e).

6. A process as claimed in claim 1, wherein the carboxylic acids used are aliphatic monocarboxylic acids having from 2 to 8 carbon atoms.

7. A process as claimed in claim 1, wherein the carboxylic acids used are aliphatic dicarboxylic acids.

8. A process as claimed in claim 1, wherein the carboxylic acids used are aromatic carboxylic acids.

9. A process as claimed in claim 1, wherein the carboxylic acids are substituted.

10. A process as claimed in claim 1, wherein the carboxylic acids are substituted by hydroxyl or amino groups.

11. A process as claimed in claim 1, wherein the carboxylic acids are formed in situ from their ammonium, alkali metal or alkaline earth metal salts.

12. A process as claimed in claim 1, wherein the carboxylic acids are used in the form of their intermolecular or intramolecular anhydrides.

13. A process as claimed in claim 1, wherein the carboxylic acids are used in an amount of from 0.2 to 10% by weight, based on the sum of the components b) to e).

14. A chlorofluorocarbon-free flexible, semirigid or rigid polyurethane molding having a cellular core and a compacted surface zone which can be produced as claimed in any of claims 1 to 13.

15. The use of a mixture of at least one phosphorus-containing, carbodiimide-forming catalyst and at least one carboxylic acid and/or carboxylic anhydride as blowing agent for producing a chlorofluorocarbon-free flexible, semirigid or rigid polyurethane molding having a cellular core and a compacted surface zone.

## Revendications

1. Procédé de préparation de corps moulés en polyuréthane élastiques mous, mi-durs ou durs, exempts d'hydrocarbure chlorofluoré avec un noyau alvéolaire et une zone marginale compactée, par réaction de
a) polyisocyanates avec
b) des polyesters-polyols et/ou polyéthers-polyols et éventuellement des agents extenseurs de chaîne et des agents de réticulation,
c) des agents gonflants
d) des catalyseurs ainsi qu'éventuellement
e) des adjuvants et/ou des additifs,
**caractérisé en ce que** les agents gonflants c) contiennent
c1) au moins un catalyseur formant un carbodiimide,
c2) au moins un acide carboxylique et/ou son anhydride, son amide ou son imide.

2. Procédé selon la revendication 1, **caractérisé en ce que** des composés contenant du phosphore sont employés en tant que catalyseurs formant des carbodiimides.

3. Procédé selon la revendication 1, **caractérisé en ce que** des composés hétérocycliques à cinq maillons avec l'atome de phosphore comme hétéroatome sont employés en tant que catalyseurs contenant du phosphore formant des carbodiimides.

4. Procédé selon la revendication 1, **caractérisé en ce que**, en tant que catalyseurs contenant du phosphore formant des carbodiimides, ceux des formules générales I à II sont employés, 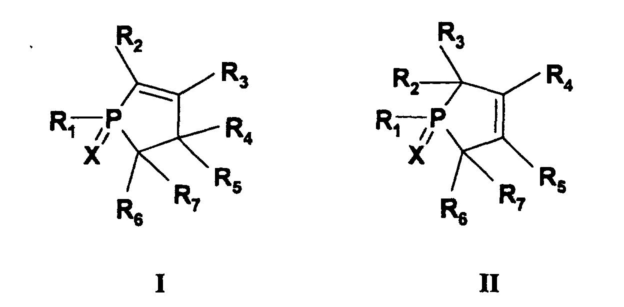 dans lesquelles
X représente un atome de soufre ou en particulier un atome d'oxygène,
R₁ représente un groupe alkyle, phényle, naphtyle ou benzyle, substitué ou non substitué, en particulier un groupe phényle ou méthyle,
R₂, R₃, R₄, R₅, R₆ et R₇ représentent indépendamment l'un de l'autre un atome d'hydrogène, un atome d'halogène ou un groupe alkyle en C₁ à C₄.

5. Procédé selon la revendication 1, **caractérisé en ce que**, les catalyseurs contenant du phosphore formant des carbodiimides sont mis en oeuvre en une quantité de 0,1 à 4,0% en poids, par rapport à la somme des composants b) à e).

6. Procédé selon la revendication 1, **caractérisé en ce que** des acides monocarboxyliques aliphatiques ayant 2 à 8 atomes de carbone sont mis en oeuvre en tant qu'acides carboxyliques.

7. Procédé selon la revendication 1, **caractérisé en ce que** des acides dicarboxyliques aliphatiques sont mis en oeuvre en tant qu'acides carboxyliques.

8. Procédé selon la revendication 1, **caractérisé en ce que** des acides caraboxyliques aromatiques sont mis en oeuvre en tant qu'acides carboxyliques.

9. Procédé selon la revendication 1, **caractérisé en ce que** les acides carboxyliques sont substitués.

10. Procédé selon la revendication 1, **caractérisé en ce que** les acides carboxyliques sont substitués par des groupes hydroxyles ou amino.

11. Procédé selon la revendication 1, **caractérisé en ce que**, en tant qu'acides carboxyliques, ces derniers sont formés *in situ* à partir de leurs sels d'ammonium, de métal alcalin, ou de métal alcalino-terreux.

12. Procédé selon la revendication 1, **caractérisé en ce que** les acides carboxyliques sont mis en oeuvre sous la forme de leurs anhydrides intermoléculaires ou intramoléculaires.

13. Procédé selon la revendication 1, **caractérisé en ce que**,les acides carboxyliques sont mis en oeuvre en une quantité de 0,2 à 10% en poids, par rapport à la somme des composants b) à e).

14. Corps moulés élastiques mous en polyuréthane, mi-durs ou durs, exempts d'hydrocarbure chlorofluoré avec un noyau alvéolaire et une zone marginale compactée, que l'on peut préparer selon Tune quelconque des revendications 1 à 13.

15. Utilisation de mélanges constitués d'au moins un catalyseur contenant du phosphore formant des carbodiimides et d'au moins un acide carboxylique et/ou son anhydride en tant qu'agent gonflants pour préparer des corps moulés élastiques mous en polyuréthane, mi-durs ou durs, exempts d'hydrocarbure chlorofluoré, avec un noyau alvéolaire et une zone marginale compactée.
